# EUROPEAN PATENT SPECIFICATION

(11) **EP 2 161 146 B1**
(45) Date of publication and mention of the grant of the patent: **04.12.2013**
(21) Application number: 08163669.8
(22) Date of filing: 04.09.2008
(51) Int. Cl.: B60G 9/00, B60G 11/46

(54) **Pneumatic axle suspension for a motor vehicle**
Pneumatische Achsenaufhängung für Motorfahrzeug
Suspension d'essieu pneumatique pour un véhicule à moteur

(43) Date of publication of application: 10.03.2010
(73) Proprietor: Iveco Magirus AG, 89079 Ulm (DE)
(72) Inventor: Baur, Günter, 73340 Amstetten (DE); Voit, Stefan, 89077 Ulm (DE)
(74) Representative: Borsano, Corrado

(56) References cited:
- DE-A1- 10 351 465
- FR-A- 2 529 838

## Description

This invention relates to a pneumatic axle suspension for a motor vehicle according to the preamble of claim 1.

Pneumatic axle suspensions are used on heavy goods vehicles, for example. Compared to mechanical axle suspensions, they offer the advantage of improved driving comfort. Further, the chassis is easy to lift and lower, e.g. when loading or unloading the vehicle. Additionally, it is easier to attach and detach a trailer to traction vehicles equipped with this kind of suspension, in that the saddle plate is pneumatically lifted or lowered together with the vehicle frame. One can, moreover, control the air spring to keep the frame height largely the same in the loaded or unloaded state.

On one widespread embodiment which shall be considered category-defining for this invention, one such pneumatic axle suspension comprises elongated guide elements disposed on the vehicle sides underneath the frame, extending along the direction of travel. These guide elements rest on the vehicle axle element and are connected at their front and rear ends, by means of articulated suspensions, with the underside of the frame, with the longitudinal frame supports, for example. From the axle element, one section of the respective guide elements therefore extends forwards, and is flexibly connected to the frame, and another section, which is also attached to the frame by means of an articulated connection, extends backwards. At least one of these sections is elastically contrived so that the guide element can resiliently absorb part of the axle load.

The guide element, including its spring-loaded section and suspension, is contrived sufficiently rigidly to ensure satisfactory longitudinal and lateral location of the axle. The rigid section absorbs the greatest portion of the braking torque. In one special construction, the guide element comprises a one-leaf spring extending between the suspension points, reinforced across approximately half its length by an additional leaf spring in order to ensure the desired rigidity and to avoid the S-type impact caused by the braking torque.

Ensuring the pneumatic suspension between the guide element and the frame there is an air bag disposed between the guide element and an upper bearing attached rigidly to the frame. In the construction to date, **see e.g.** FR2529838, the upper bearing is formed by the lower flange of the longitudinal frame support, so that the air bag sits directly underneath the longitudinal support.

In vehicles with a low frame height, the construction space between the guide element and the lower flange of the longitudinal frame support is severely limited. Hence the hieght of the air bag to be fitted in that space is also restricted, which in turn impacts on the lift path of the air bag. This construction therefore makes it difficult to combine low frame height with high lift paths.

To achieve higher lift paths, pneumatic axle suspensions are known of in which the axle element on each vehicle side is connected to the frame by means of two parallel longitudinal control arms. These longitudinal control arms ensure sufficient longitudinal location of the axle, whilst the lateral location is provided by a Panhard rod which rests on both the frame and the axle suspension, and thus guides the lateral forces into the frame. In this case, too, the air bag is fitted between the axle element and the lower flange of the frame. But while this type of suspension permits high lift paths, it does not allow low frame heights. Furthermore, the Panhard rod results in unfavourable driving characteristics, and the total weight of the components of the suspension is relatively high.

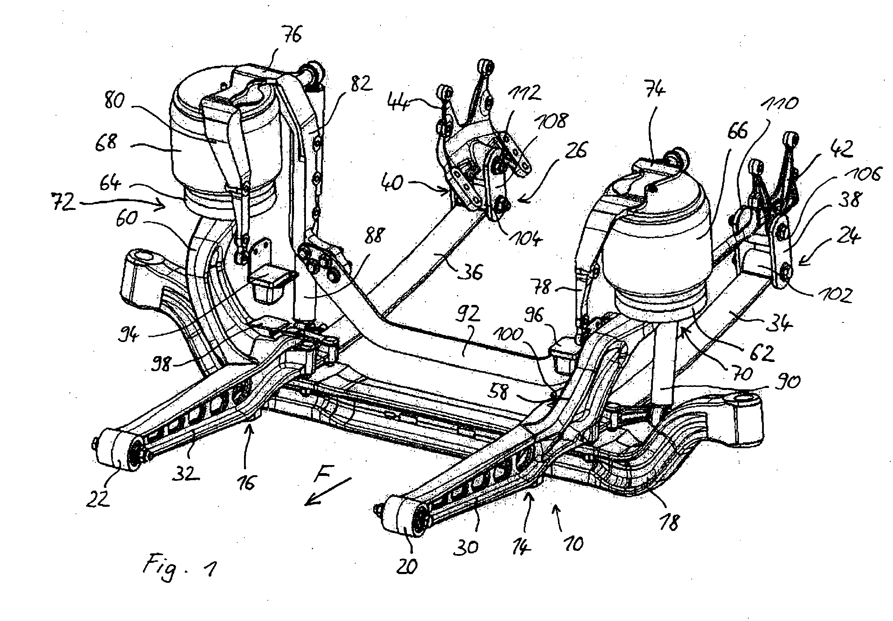

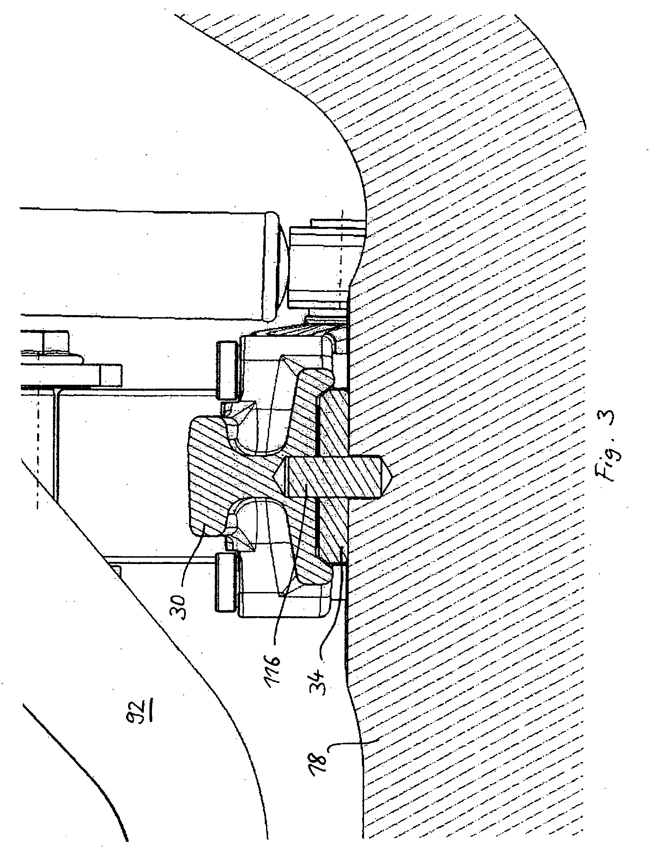

From DE10351465, it is known to arrange the air bags (12 in FIG.1) laterally to longitudinal frame supports (9a and 9b in FIG.1 and FIG.3) by means of parts which are laterally flange-mounted thereto; the ends of the links (6a and 6b in FIG.1 and FIG.3) of the suspension is mounted underneath (see FIG.3) the longitudinal frame supports (9a and 9b in FIG.1 and FIG.3).

It is therefore the task of this invention to provide a pneumatic axle suspension of the above-mentioned type, which, even at low frame heights, allows a large lift path between the lowered and the raised frame position, without impairing the vehicle driving characteristics. The guide elements should further ensure satisfactory longitudinal and lateral location of the axle element without constructional disadvantages.

This task is solved according to the invention by a pneumatic axle suspension with the features of claim 1.

In the pneumatic axle suspension according to the invention, one of the two sections of a guide element, e.g. the part facing the front end of the vehicle, is contrived as a rigid part, e.g. as a forged or cast part. The remaining section comprises a leaf spring and ensures part of the embodiment properties of the suspension.

In this case, the air bags are disposed at the side of the frame. The upper bearing for supporting an air bag on the frame is formed by an upper bracket attached to the side of the frame.

The upper bearing of the air bag can therefore be vertically displaced at the side of the frame. The space available for fitting the air bag is no longer restricted to the room between the lower flange of a longitudinal frame support and the guide element; instead, there is substantially more space available for this purpose at the side of the frame. This delivers some significant advantages. Firstly, this type of construction can easily be married with low frame heights. Secondly, air bags with higher possible lift paths can be used, so that the lift paths to be achieved are considerably bigger. This means that even low-build vehicles can be pneumatically lifted a long way by means of the axle suspension according to the invention.

The combination of a rigid and a spring-loaded section of the guide element delivers good driving characteristics. In particular, the axle can be longitudinally and laterally located without problem. The leaf spring ensures part of the lateral location of the axle, whilst the rigid part of the remaining section also contributes to the lateral location and ensures a stable connection between the individual components. This guarantees both the longitudinal and lateral location of the axle, and absorbs the braking moment without deformation by the S-type impact. In the frame of the invention, the rigid part can be contrived as one piece or may be assembled from several interconnected individual components.

There is no need for a Panhard rod, an undesirable part with regard to driving characteristics, to ensure the lateral location of the axle. There is no system-related need to ensure a transverse connection between one side of the frame with the opposite side of the axle. In the suspension of the front axle, the necessary steering angle is not restricted. Furthermore, a master brake cylinder, for example, can easily be incorporated in the wheel suspension. Overall, the number of parts required is reduced. Using the same suspension construction for high and low-build vehicles also delivers a cost benefit.

In one preferred embodiment of the invention, the guide elements comprise lower brackets on which the respective air bags rest, and which project outward to the side from the rigid sections of the guide elements.

These lower brackets, which can, for example, be contrived in one piece together with the rigid parts of the guide elements, form the lower bearings on which the air bags rest. The bearings may be formed by plates, for example, supported by arms which project laterally, upwards and outwards in a bow shape, from the rigid sections of the guide elements.

Each upper bracket is preferably connected with the guide element by means of a shock absorber.

In another preferred embodiment, a crossbar extends underneath the frame, between the lower parts of two brackets positioned opposite each other on the vehicle, perpendicular to the direction of travel.

This crossbar creates a connection between two guide elements, positioned opposite each other at the sides of the vehicle, of the pneumatic axle suspension according to the invention. The crossbar can help stabilise the vehicle frame.

In another preferred embodiment, the front end of a guide element is flexibly connected to a part which is flange-mounted to the front end of the longitudinal frame support and is a multifunctional part which accommodates other parts of the vehicle at its front end.

According to another preferred embodiment, the section of the guide element comprising the leaf spring is the section which faces backwards, starting out from the axle element, with respect to the direction of travel.

A preferred embodiment of the invention will be described below, with reference to the following drawings.
Fig. 1 is a perspective view of an embodiment of the pneumatic axle suspensions according to the present invention;
Fig. 2 shows the arrangement of the axle suspensions as per Fig. 1 in the front part of a vehicle frame structure;
Fig. 3 is a cross-section through the axle suspension shown in Fig. 2; and
Fig. 4 and 5 are side views of a part of a vehicle to explain the functioning of an embodiment of the axle suspension according to the invention.

Fig. 1 shows two pneumatic axle suspensions according to the invention, positioned in the substructure of a vehicle such as a heavy goods vehicle. The direction of travel of the vehicle is designated by an arrow, F, and will be referred to hereafter as the "front", whilst the opposite direction pointing towards the rear end of the vehicle will be called the "back". A pneumatic axle suspension 10 is disposed in the substructure of the vehicle frame, which is not shown here for the sake of clarity. The left and right parts of axle suspension 10 are mirror-symmetrical in relation to a vertical plane running through the centre of the vehicle in the longitudinal direction.

Axle suspension 10 comprises two elongated guide elements 14,16, each of which rests on one side of the vehicle, on an axle element 18. This axle element 18 is the front axle of the vehicle. Guide elements 14,16 are mirror-symmetrical to each other.

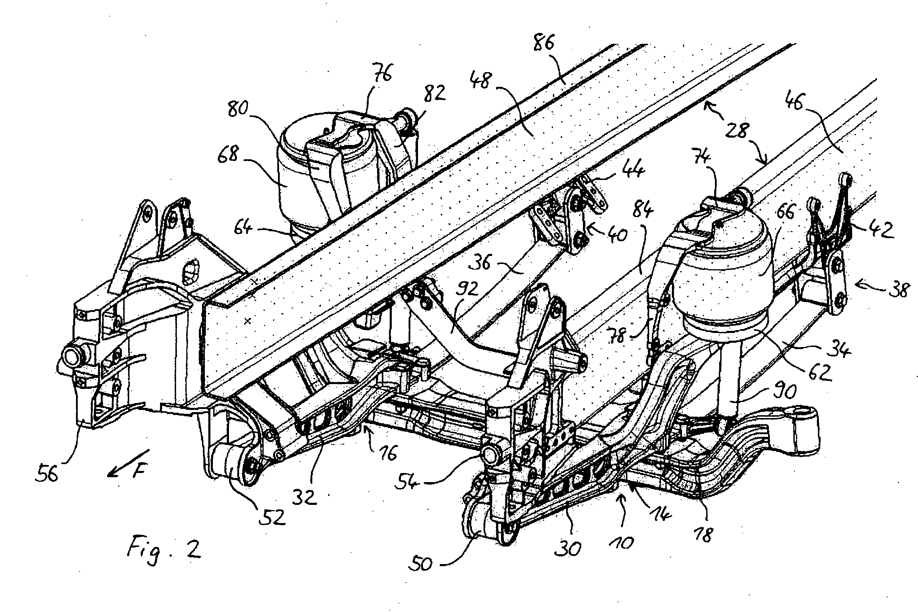

As shown in more detail in Fig. 2, the front end 20,22 and rear end 24,26 of respective guide element 14,16 on each vehicle side is flexibly connected to frame 28 by an articulated suspension, as will be described in more detail below. Somewhere in the middle portion between these suspension points 20,22 and 24,26, guide element 14,16 rests on axle element 18.

A forward-facing section 30,32 extends from axle element 18 in the direction of travel F, up to the front end 20,22 of guide element 14,16, as does a backward-facing section 34,36, up to rear end 24,26. The front section 30,32 is formed as a rigid part contrived in one piece, as a forged or cast part, for example. Relative to frame 28, this creates a pivotable connection between axle element 18 and frame 28. Front section 30,32 can be pivoted around the articulated suspension on frame 28 by a certain angle, i.e. by an angle permitting movement of guiding element 14,16 relative to frame 28. As shown in Fig. 2, the front end 20,22 of guide element 14,16 is connected to frame 28 via hinge 50,52, via which front section 30,32 is connected with a multifunctional element 54,56 which is laterally flange-mounted to the front end of a longitudinal frame support 46,48.

The remaining rear section 34,36 of guide element 14,16 is formed by a spring leaf which is connected at its front end with forward-facing section 30,32, and whose rear end is mounted, via a rocker arm 38,40 and a frame connecting element 42,44, to a rear part of a longitudinal frame support 46,48.

In the region of axle element 18, an approximately bow-shaped arm 58,60 is moulded to the rigid part of front section 30,32, which, at the rear end of front section 30,32, extends outwards to the side and backwards and upwards in a bow shape. At its upper end, arm 58,60 is provided with an approximately plate-shaped bearing 62,64, which serves to support an approximately cylinder-shaped air bag 66,68. Together, arm 58,60 and plate-shaped bearing 62,64, form a bracket 70,72, which projects laterally from the rigid front section 30,32 of guide element 14,16.

The air bag 66,68 resting on bracket 70,72 is held at its upper end in a top bearing formed by an upper bracket 74,76. This upper bracket 74,76 is a part which encompasses the upper end of air bag 66,68 and comprises two inwardly frame-facing, downwardly extending flange parts 78,80,82, which are laterally flange-mounted to longitudinal frame support 46,48. The part of bracket component 74,76 resting on air bag 66,68 is therefore positioned at a height above the respective top flange 84,86 of longitudinal frame support 46,48 (see Fig. 2).

Hence bag 66,68 supports guide element 14,16 with respect to frame 28. Air bag 66,68 also serves to pneumatically lift frame 28 with respect to axle element 18. Furthermore, a shock absorber 88,90 is mounted between the top end of upper bracket 74,76 and the rear end of the rigid part of front section 30,32 of guide element 14,16.

Adjoining the lower part of top bracket 74,76, namely at each lower end of rear flange section 82 of bracket 74,76, is one end of a crossbar 92 which extends perpendicular to the direction of travel, F, and whose opposite end is connected to the other vehicle side at the lower end of the other respective bracket 74,76. Crossbar 92 thus lends additional stability to the arrangement comprising the two pneumatic axle suspensions 10,12 for an axle element 18. The ends of crossbar 92 are screwed to the respective upper brackets 74,76.

To limit the lift path or downward spring path of frame 28, an end stop 94,96 is attached to the lower flange of respective longitudinal frame support 46,48, and can abut against a corresponding stop 98,100 disposed above axle element 18 on the rigid part of front section 30,32.

At the rear end 24,26 of guide element 14,16, the leaf spring of rear section 34,36 is provided with a spring eye 102,104, pivotably mounted to be enclosed in a lower end of a rigid pivotable element 106,108, whose upper end is pivotably connected, via a hinge 110,112, with frame connecting element 42,44 which is laterally flange-mounted to longitudinal frame support 46,48. This forms a rocker arm 38,40.

Fig. 2 shows the arrangement of guide element 14,16 below respective longitudinal frame support 46,48. Mounting air bag 66,68 at the side of frame 28 means the height of the top frame edge can be reduced in relation to axle suspension 10. The lateral disposition of air bags 66,68 means their length, and hence the lift path covered, can be increased. This means that large lift heights can be achieved even when the static height of the top frame edge is low.

Fig. 2 also shows other details of the vehicle substructure, including the wheel suspensions on the ends of axle element 18. These details are of no importance to the functioning of the invention. The construction according to the invention of axle suspension 10,12 enables a large steer angle and the installation of a master brake cylinder, designated in Fig. 2 by reference 114.

The rigid part of front section 30,32 of guide element 14,16 ensures longitudinal and lateral location of axle element 18 and for high flexural strength of the control arm. On the other hand, the elastic properties are well ensured by the rear section 34,36. The rigid part certainly need not be contrived in one piece, as is the case in the embodiment shown here, but can be made up of a plurality of individual components in order to achieve the necessary rigidity.

Fig. 3 shows details of the connection between the front and rear sections 30,32 and 34,36. According to Fig. 3, the front-facing end of a leaf spring 34,36 of the rear section is enclosed in a corresponding recess in the rigid part of front section 30,32. The screw connection of the rigid control arm delivers a very good positive lock between the individual components. Friction locking plus a king bolt 116 driven vertically through the end of the leaf spring, also ensure a firm connection. The lower end of king bolt 116 projects into axle body 18, whilst the upper end is accommodated by the rear end of the rigid part of front section 30,32, which is flange-mounted on axle element 18.

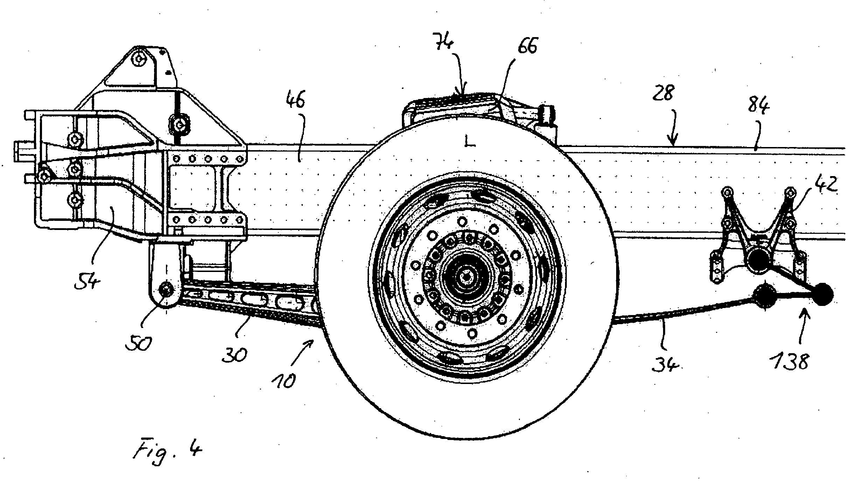

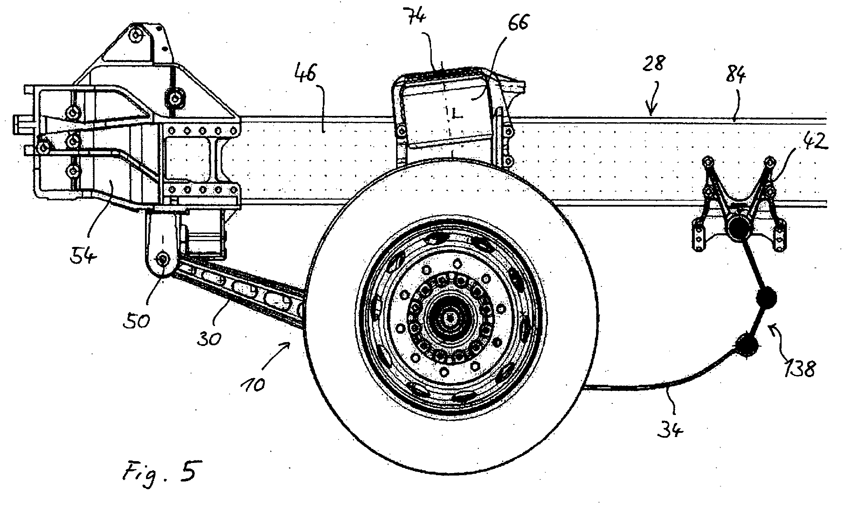

Figures 4 and 5 show a vehicle equipped with another embodiment of the axle suspension according to the invention, in various lifting states. In this case, instead of a simple spring rocker arm 38,40, an articulated mechanism 138 is envisaged at the end of the leaf spring, comprising two rigid elements movably connected with each other. In Fig. 4, the vehicle frame 28 is lowered, and mechanism 138, which is only shown diagrammatically here, is folded together. If the vehicle is lifted by means of the air bags, the upper lift position shown in Fig. 5 is reached. During lifting, the rigid front section 30,32 is pivoted around the hinged connection 50,52 with the front multifunctional part 54,56, and the distance of axle element 18 from frame 28 is increased. This change in distance causes deformation in the spring, with the articulated mechanism preventing overload. This happens in that the described mechanism compensates the deformation path of the spring which causes the spring overload. Thus large lifting heights can easily be achieved even at low static heights of the frame top edge.

## Claims

1. Pneumatic axle suspension (10) for a vehicle, with guide elements (14,16) disposed at the vehicle sides, underneath the frame (28), which extend in the direction of travel (F) and rest on an axle element (18) of the vehicle, and whose ends (20,22,24,26) are flexibly connected to frame (28) by articulated suspensions, said guide elements (14,16) each having a section (30,32) projecting forwards from axle element (18) and a section (34,36) projecting backwards, of which at least one section (34,36) is elastically spring-loaded,
and having air bags (66,68) to support guide elements (14,16) with respect to frame (28), each air bag (66,68) being disposed between a guide element (14,16) and an upper bearing fixed rigidly to frame (28),
wherein one of the two sections (30,32) of a guide element (14,16) is contrived as a rigid part, and the other section (34,36) comprises a leaf spring,
and wherein air bags (66,68) are disposed to the side of frame (28), and the upper bearing of an air bag (66,68) is formed by an upper bracket (74,76) attached to the side of frame (28),
**characterised in that** the upper brackets (74,76) are formed by parts which are laterally flange-mounted to the longitudinal frame supports (46,48),
and **characterised in that** the front ends (20,22) of the guide elements (14, 16) are flexibly connected to parts (54,56) which are laterally flange-mounted to the front ends of the longitudinal frame supports (46,48).

2. Pneumatic axle suspension for a vehicle according to claim 1, **characterised in that** the guide elements (14,16) include lower brackets (70,72), on which the respective air bags (66,68) rest, and from which rigid sections (30,32) of guide elements (14,16) project laterally.

3. Pneumatic axle suspension for a vehicle according to claims 1 or 2, **characterised in that** the upper bracket (74,76) is connected to the corresponding guide element (14,16) by means of a shock absorber (88,90).

4. Pneumatic axle suspension for a vehicle according to one of the preceding claims, **characterised in that** a crossbar extends underneath frame (28), perpendicular to the direction of travel (F), between the lower parts of two brackets (74,76) disposed on opposite vehicle sides.

5. Pneumatic axle suspension for a vehicle according to one of the preceding claims, **characterised in that** the section (34,36) of a guide element (14,16) comprising the leaf spring is the section which faces rearwards from axle element (18) with respect to the direction of travel (F).

## Patentansprüche

1. Pneumatische Achsenaufhängung (10) für ein Motorfahrzeug,
mit Führungselementen (14, 16), die unter einem Rahmen (28) an den Seiten des Motorfahrzeugs angeordnet sind, und sich in Fahrtrichtung (F) erstrecken und auf einem Achselement (18) des Motorfahrzeugs aufliegen und deren Enden (20, 22, 24. 26) flexibel über gelenkige Aufhängungen mit dem Rahmen (28) verbunden sind, wobei die Führungselemente (14, 16) jeweils einen Bereich (30, 32), der sich vom Achselement (18) nach vorne erstreckt und einen Bereich (34, 36), der sich nach hinten erstreckt, aufweisen, von denen zumindest ein Bereich (34, 36) elastisch Feder-belastet ist, und mit Luftkissen (66, 68) zum Abstützen der Führungselemente (14, 16) in Bezug auf den Rahmen (28), wobei jedes Luftkissen (66, 68) zwischen einem Führungselement (14, 16) und einer oberen Halterung angeordnet ist, die fest mit dem Rahmen (28) verbunden ist,
wobei einer der beiden Bereiche (30, 32) eines Führungselements (14, 16) als starres Bauteil ausgebildet ist und der andere Bereich (34, 36) eine Blattfeder aufweist, und wobei die Luftkissen (66, 68) an der Seite des Rahmens (28) angeordnet sind, und die obere Halterung eines Luftkissens (66, 68) von einem oberen Bügel gebildet ist, der an der Seite des Rahmens (28) befestigt ist,
**dadurch gekennzeichnet,**
**dass** die oberen Bügel (74, 76) durch Bauteile gebildet sind, die seitlich an den sich längs erstreckenden Rahmenhalterungen (46, 48) angeflanscht sind, und
**dass** die vorderen Enden (20, 22) der Führungselemente (14, 16) flexibel mit Bauteilen (54, 56) verbunden sind, die seitlich an die vorderen Enden der sich längs erstreckenden Rahmenhalterungen (46, 48) angeflanscht sind.

2. Pneumatische Achsenaufhängung (10) für ein Motorfahrzeug nach Anspruch 1 oder 2, **dadurch gekennzeichnet, dass** die Führungselemente (14, 16) untere Halterungen umfassen, auf welchen die jeweiligen Luftkissen (66, 68) aufliegen, und von welchen starre Bereiche (30, 32) der Führungselemente (14, 16) seitlich hervorragen.

3. Pneumatische Achsenaufhängung (10) für ein Motorfahrzeug nach Anspruch 1 oder 2, **dadurch gekennzeichnet, dass** der obere Bügel (74, 76) mit dem zugehörigen Führungselement (14, 16) über einen Stoßdämpfer (88, 90) verbunden ist.

4. Pneumatische Achsenaufhängung (10) für ein Motorfahrzeug nach einem der voranstehenden Ansprüche, **dadurch gekennzeichnet, dass** sich eine Querstange unterhalb des Rahmens (28) senkrecht zur Fahrtrichtung (F) zwischen den unteren Teilen zweier Bügel (74, 76) erstreckt, die auf gegenüberliegenden Seiten des Motorfahrzeugs angeordnet sind.

5. Pneumatische Achsenaufhängung (10) für ein Motorfahrzeug nach einem der voranstehenden Ansprüche, **dadurch gekennzeichnet, dass** der Bereich (34, 36) eines Führungselements (14, 16), der die Blattfeder aufweist, derjenige Bereich ist, der vom Achsenelement (18) in Bezug auf die Fahrtrichtung (F) nach hinten weist.

## Revendications

1. Suspension d'essieu pneumatique (10) pour un véhicule, avec des éléments guides (14, 16) disposés sur les côtés du véhicule, sous le cadre (28), qui s'étendent dans le sens de déplacement (F) et reposent sur un élément d'essieu (18) du véhicule, et dont les extrémités (20, 22, 24, 26) sont raccordées de façon flexible au cadre (28) par des suspensions articulées, lesdits éléments guides (14, 16) comportant chacun une section (30, 32) faisant saillie vers l'avant à partir de l'élément d'essieu (18) et une section (34, 36) faisant saillie vers l'arrière, dont au moins une section (34, 36) est à ressort élastique,
et comportant des coussins d'air (66, 68) pour supporter les éléments guides (14, 16) par rapport au cadre (28), chaque coussin d'air (66, 68) étant disposé entre un élément guide (14, 16) et un palier supérieur fixé au cadre (28) de façon rigide,
dans laquelle une des deux sections (30, 32) d'un élément guide (14, 16) est conçue sous forme de partie rigide, et l'autre section (34, 36) comprend un ressort à lames,
et dans laquelle les coussins d'air (66, 68) sont disposés sur le côté du cadre (28), et le palier supérieur d'un coussin d'air (66, 68) est formé par une patte de fixation supérieure (74, 76) fixée au côté du cadre (28),
**caractérisée en ce que** les pattes de fixation supérieures (74, 76) sont formées par des parties qui sont montées par bride latéralement sur les supports de cadre longitudinaux (46, 48),
et **caractérisée en ce que** les extrémités avant (20, 22) des éléments guides (14, 16) sont raccordées de façon flexible à des parties (54, 56) qui sont montées par bride latéralement sur les extrémités avant des supports de cadre longitudinaux (46, 48).

2. Suspension d'essieu pneumatique pour un véhicule selon la revendication 1, **caractérisée en ce que** les éléments guides (14, 16) comprennent des pattes de fixation inférieures (70, 72), sur lesquelles des coussins d'air respectifs (66, 68) reposent, et à partir desquelles des sections rigides (30, 32) des éléments guides (14, 16) font saillie latéralement.

3. Suspension d'essieu pneumatique pour un véhicule selon les revendications 1 ou 2, **caractérisée en ce que** la patte de fixation supérieure (74, 76) est raccordée à l'élément guide correspondant (14, 16) au moyen d'un amortisseur de chocs (88, 90).

4. Suspension d'essieu pneumatique pour un véhicule selon une des revendications précédentes, **caractérisée en ce qu'**une traverse s'étend sous le cadre (28), perpendiculairement au sens de déplacement (F), entre les parties inférieures des deux pattes de fixation (74, 76) disposées sur des côtés opposés du véhicule.

5. Suspension d'essieu pneumatique pour un véhicule selon une des revendications précédentes, **caractérisée en ce que** la section (34, 36) d'un élément guide (14, 16) comprenant le ressort à lames est la section qui est orientée vers l'arrière à partir de l'élément d'essieu (18) par rapport au sens de déplacement (F).
